# EUROPÄISCHE PATENTSCHRIFT

(11) **EP 3 412 132 B1**
(45) Veröffentlichungstag und Bekanntmachung des Hinweises auf die Patenterteilung: **12.05.2021**
(21) Anmeldenummer: 17400032.3
(22) Anmeldetag: 09.06.2017
(51) Int. Cl.: A01D 34/00, A47L 25/00

(54) **BODENBEARBEITUNGSSYSTEM MIT MINDESTENS EINER INTENSIVZONE**
FLOOR PROCESSING SYSTEM WITH AT LEAST ONE INTENSIVE ZONE
SYSTÈME DE TRAITEMENT DE SOL COMPRENANT AU MOINS UNE ZONE INTENSIVE

(43) Veröffentlichungstag der Anmeldung: 12.12.2018
(73) Patentinhaber: Andreas Stihl AG & Co. KG, 71336 Waiblingen (DE)
(72) Erfinder: Matt, Sebastian, 6330 Kufstein (AT); Zöttl, Samuel, 6092 Birgitz (AT)
(74) Vertreter: Wasmuth, Rolf

(56) Entgegenhaltungen:
- EP-A1- 2 269 433
- WO-A1-2014/086498
- WO-A1-2015/072897
- US-A1- 2005 230 166
- US-A1- 2017 020 064

## Beschreibung

Die Erfindung betrifft ein Bodenbearbeitungssystem aus mindestens einem selbstfahrenden Bodenbearbeitungsgerät, wobei das Bodenbearbeitungsgerät einen Antrieb, eine Steuereinheit und einen bordeigenen Akku zur Energieversorgung des Bodenbearbeitungsgerätes aufweist. Durch eine Randbegrenzung ist ein Arbeitsbereich für das Bodenbearbeitungsgerät bestimmt, wobei dieses innerhalb des Arbeitsbereichs einen von der Steuereinheit bestimmten Arbeitsweg fährt.

Es ist bekannt, ein selbstfahrendes Bodenbearbeitungsgerät in einem Arbeitsbereich zu betreiben, der durch einen Draht begrenzt ist. Das Bodenbearbeitungsgerät fährt innerhalb des Arbeitsbereiches selbstständig einen zufälligen, vorgegebenen oder selbstständig geplanten Weg ab. Eine Basisstation des Bodenbearbeitungssystems ist elektrisch an den Draht angeschlossen und sendet ein Drahtsignal auf dem Draht, dessen elektromagnetisches Feld in einer Empfangsspule des Bodenbearbeitungsgerätes ein Empfangssignal induziert. Das Empfangssignal wird zur Steuerung des Bodenbearbeitungsgerätes in einer Steuereinheit verarbeitet und das Bodenbearbeitungsgerät innerhalb des Arbeitsbereichs entsprechend gesteuert.

Derartige Bodenbearbeitungssysteme können ein einzelnes oder auch mehrere selbstfahrende Bodenbearbeitungsgeräte umfassen, z. B. um größere Flächen effektiv zu bearbeiten.

Derartige Bodenbearbeitungssysteme sind aus der US 2005/230166 A1, der WO 2015/072897 A1, der EP 2 269 433 A1 und WO 2014/086498 A1 bekannt. So offenbart die US 2005/230166 A1 ein Bodenbearbeitungssystem aus einem Bodenbearbeitungsgerät, welches in mehreren sich überlappenden Arbeitsbereichen zufällige Arbeitswege abfährt. Die WO 2015/072897 A1 und die EP 2 269 433 A1 offenbaren ein durch GPS (Global Positioning System) ferngesteuertes Bodenbearbeitungsgerät, welches abhängig von einer durchgeführten Positionsbestimmung verschiedene Arbeitszustände ausführt. Die WO 2014/086498 A1 beschreibt allgemein ein Bodenbearbeitungssystem und gibt an, wie die auf mehreren Drahtschleifen verschiedener Arbeitsbereiche gesendeten Signale dem in einem Arbeitsbereich fahrenden Bodenbearbeitungsgerät zugeordnet werden können.

Wird ein Bodenbearbeitungssystem aus insbesondere mehreren, gemeinsam eine Arbeitsfläche bearbeitenden Rasenmähern in Betrieb genommen, wird angenommen, regelmäßig ein zufriedenstellendes Ergebnis erzielen zu können. In der Praxis werden jedoch in einer größeren Rasenfläche immer Bereiche vorhanden sein, in denen das Gras stärker wächst als in anderen Bereichen. Um auch diese Flächenbereiche mit einem stärkeren Bewuchs zufriedenstellend zu bearbeiten, wird meist die Gesamtbetriebsdauer des Systems erhöht.

Der Erfindung liegt die Aufgabe zugrunde, ein Bodenbearbeitungssystem aus zumindest einem Bodenbearbeitungsgerät derart auszubilden, dass unterschiedliche Anforderungen an die Flächenbearbeitung ohne wesentliche Verlängerung der Gesamtbetriebsdauer des Systems möglich sind.

Die Aufgabe wird nach den Merkmalen des Anspruchs 1 gelöst.

Die durch eine virtuelle Grenze gebildete Intensivgrenze kann z. B. eine Grenze innerhalb einer in dem Bodenbearbeitungsgerät abgespeicherten Karte sein, nach deren Daten das Bodenbearbeitungsgerät arbeitet. Eine virtuelle Grenze ist auch durch GPS-Satellitennavigation, durch Funkbaken oder dgl. Ortsbestimmungen möglich. Vorteilhaft ist, dass die virtuelle Grenze durch einen Benutzer frei vorgegeben und nach Bedarf geändert werden kann.

In einer einfachen Ausführungsform der Erfindung nutzt der Benutzer als elektronisches Hilfsmittel ein Smartphone und startet auf diesem die Ortsbestimmung durch Aktivierung der GPS-Satellitennavigation. Dann bestimmt der Benutzer durch Bedienung einer auf dem Smartphone gestarteten Applikation eine Intensivzone mit z. B. kreisförmiger Grundform. Hierzu kann der Benutzer z. B. den Radius R des Kreises um seinen Standpunkt M eingeben. Nach Festlegen der Intensivzone auf dem elektronischen Hilfsmittel werden die durch die Applikation generierten GPS-Daten drahtlos per Funkverbindung an einen geeigneten Empfänger des Bodenbearbeitungsgerätes übertragen. Die über die Funkverbindung erhaltenen Daten werden als zu berücksichtigende Intensivzone abgespeichert.

Das Bodenbearbeitungsgerät wird beim Überfahren der gesetzten Intensivgrenze in Abhängigkeit der abgespeicherten Zustandsvariablen in den Intensivmodus schalten. In diesem Intensivmodus ist das Bodenbearbeitungsgerät insbesondere derart gesteuert, dass es nur innerhalb der gesetzten Intensivgrenzen der Intensivzone arbeitet.

Durch den Intensivmodus kann ein im Arbeitsbereich liegender Flächenbereich mit erhöhtem Bearbeitungsbedarf in einfacher Weise nach Wunsch markiert und bearbeitet werden, ohne dass sich die Gesamtbearbeitungsdauer des zu bearbeitenden Arbeitsbereichs erhöht. Das in die Intensivzone eingefahrene Bodenbearbeitungsgerät wird innerhalb der Intensivgrenzen seine Fahrwege ausführen, wobei es jeweils mit Annäherung oder Erreichen der Intensivgrenze seine Richtung ändert, um innerhalb der Intensivzone zu bleiben. Diese Intensivzone liegt vorzugsweise innerhalb des Arbeitsbereichs; es kann aber auch vorgesehen sein, dass die Intensivzone zumindest teilweise aus dem Arbeitsbereich herausragt. Da das in die Intensivzone eingefahrene Bodenbearbeitungsgerät nicht ausschließlich nach der Intensivgrenze gesteuert wird, kann eine aus der Randbegrenzung herausragende Intensivzone nicht stören. In diesem Fall wird die Randbegrenzung höher priorisiert und dadurch die Intensivzone eingeschränkt.

In bevorzugter Ausbildung der Erfindung ist vorgesehen, dass das Bodenbearbeitungsgerät beim Überfahren der Intensivgrenze in den Intensivmodus schaltet. Zweckmäßig erfolgt dies bei einem erstmaligen Überfahren der Intensivgrenze. Andere Auslöser zum Aktivieren des Intensivmodus sind zweckmäßig.

Es können im Arbeitsbereich auch mehrere Intensivzonen vorgesehen sein. Durch die Koordinaten seiner Intensivgrenze kann eine Intensivzone bestimmt und von einer zweiten oder weiteren Intensivzone unterschieden werden. Die Bearbeitung mehrerer Intensivzonen kann nacheinander von nur einem Bodenbearbeitungsgerät ausgeführt werden. Es kann auch zweckmäßig sein, die Bearbeitung mehrerer Intensivzonen auf mehrere im Bodenbearbeitungssystem arbeitende Bodenbearbeitungsgeräte aufzuteilen.

Ein im Bodenbearbeitungsgerät geschalteter Intensivmodus wird vorzugsweise nach Erreichen eines vorgegebenen Abschaltparameters beendet. Ein derartiger Abschaltparameter kann zweckmäßig anhand von aktuellen Betriebsdaten des Bodenbearbeitungsgerätes bestimmt werden.

In einer einfachen Ausgestaltung ist vorteilhaft vorgesehen, den Abschaltparameter als vorgegebene Zeitspanne zu wählen. Der Intensivmodus wird nach einer vorgegebenen Zeitspanne, z. B. zweckmäßig nach der Aufenthaltsdauer des Bodenbearbeitungsgerätes Richtungsänderungen des Bodenbearbeitungsgerätes innerhalb der Intensivzone sein und nur durch die Aufenthaltszeit des Bodenbearbeitungsgerätes innerhalb der Intensivzone bestimmt sein.

In einer weiteren Ausgestaltung der Erfindung ist vorgesehen, den Abschaltparameter als eine vorgegebene Anzahl von Richtungsänderungen des Bodenbearbeitungsgerätes innerhalb der Intensivzone festzulegen. Werden z. B. fünfzehn Richtungsänderungen als Abschaltparameter vorgegeben, so wird der Intensivmodus nach Erreichen der vorgegebenen Anzahl von Richtungsänderungen beendet. Immer dann, wenn das Bodenbearbeitungsgerät die Intensivgrenze erreicht, wird es die Fahrtrichtung ändern, um innerhalb der Intensivzone zu bleiben. Ist die vorgegebene Anzahl von Richtungsänderungen ausgeführt, wird der Intensivmodus beendet. Die tatsächliche Aufenthaltsdauer des Bodenbearbeitungsgerätes innerhalb der Intensivzone kann dabei variieren.

Es kann auch vorgesehen sein, den Abschaltparameter in Form einer Wegstrecke vorzugeben, z. B. nach der vorgegebenen, abgefahrenen Distanz des Fahrwegs des Bodenbearbeitungsgerätes innerhalb der Intensivzone.

In besonderer Weiterbildung der Erfindung ist vorgesehen, ein abgeschlossenes Bearbeiten einer jeweiligen Intensivzone über eine Zustandsvariable zu beschreiben, die im Bodenbearbeitungsgerät abgespeichert ist. Die Zustandsvariable kann z. B. ein gesetztes Flag sein, das als Statusindikator anzeigt, ob eine Bearbeitung abgeschlossen ist. Ist der Statusindikator gesetzt, z. B. auf" 1" gesetzt, wird das Bodenbearbeitungsgerät bei einem erneuten Einfahren in eine Intensivzone nicht erneut in den Intensivmodus geschaltet. Nur wenn das Flag nicht gesetzt ist, z. B. "0" ist, wird nach der Erfindung bei einem Einfahren in eine Intensivzone zur Bearbeitung der Intensivzone in den Intensivmodus geschaltet. Nach der Weiterbildung der Erfindung wird das Bodenbearbeitungsgerät in Abhängigkeit von dem Wert der Zustandsvariablen in den Intensivmodus schalten.

Vorteilhaft wird die Zustandsvariable des Bodenbearbeitungsgerätes in Abhängigkeit von zumindest einer Betriebsvariablen des Bodenbearbeitungsgerätes zurückgesetzt. Die Zustandsvariable wird vorteilhaft durch einen vorgegebenen Wert einer ausgewählten Betriebsvariablen des Bodenbearbeitungsgerätes zurückgesetzt. In einer ersten Ausführungsform kann die ausgewählte Betriebsvariable eine Betriebsdauer des Bodenbearbeitungsgerätes sein. In einer zweiten Ausführungsform kann als ausgewählte Betriebsvariable die Wegstrecke des zurückgelegten Fahrwegs des Bodenbearbeitungsgerätes genutzt werden. In einer dritten Ausführungsform kann eine Anzahl von Richtungsänderungen des Bodenbearbeitungsgerätes die ausgewählte Betriebsvariable sein. In einer vierten Ausführungsform kann eine Anzahl des Überfahrens einer Intensivgrenze einer Intensivzone durch das Bodenbearbeitungsgeräte als ausgewählte Betriebsvariable genutzt werden. Die vorstehend alternativ genannten ausgewählten Betriebsvariablen können auch in beliebiger Kombination miteinander ein Zurücksetzen der Zustandsvariablen bewirken.

Zweckmäßig weist das Bodenbearbeitungsgerät eine erste, mit der Randbegrenzung des Arbeitsbereichs zusammenwirkende Navigationseinheit und eine mindestens eine weitere, mit der Intensivgrenze zusammenwirkende Navigationseinheit auf. Jede Navigationseinheit ist vorteilhaft an die Steuereinheit des Bodenbearbeitungsgerätes angeschlossen. Die Steuereinheit bildet vorteilhaft eine gemeinsame Steuereinheit für die erste und jede weitere Navigationseinheit.

Es kann auch vorgesehen sein, dass das Bodenbearbeitungsgerät eine gemeinsame Navigationseinheit für die Randbegrenzung und die Intensivgrenze nutzt. So kann z. B. die Randbegrenzung durch GPS-Satellitennavigation bestimmt sein, die Randbegrenzung des Arbeitsbereichs somit als virtuelle Grenze ausgebildet sein. Die virtuelle Grenze der Intensivzone kann ebenfalls durch GPS-Satellitennavigation vorgegeben werden. Die Daten der GPS-Satellitennavigation werden der Auswerteeinheit des Bodenbearbeitungsgerätes zugeführt. Über die Auswertung der empfangenen Satellitendaten kann ermittelt werden, ob das Bodenbearbeitungsgerät innerhalb der Randbegrenzung des Arbeitsbereichs oder bereits innerhalb der Intensivgrenze der Intensivzone fährt.

In einer einfachen Ausgestaltung ist vorgesehen, die Randbegrenzung des Arbeitsbereichs durch einen Draht auszubilden. Auf diesem Draht wird ein Drahtsignal gesendet, welches in einer Empfangsspule des Bodenbearbeitungsgerätes ein Empfangssignal induziert. Das Empfangssignal wird zur Steuerung des Bodenbearbeitungsgerätes innerhalb des Arbeitsbereichs verwendet.

In einer bevorzugten Ausführungsform der Erfindung ist das Bodenbearbeitungsgerät ein selbstfahrender Rasenmäher.

In besonderer Weiterbildung der Erfindung werden der Arbeitsbereich und die mindestens eine Intensivzone von mehreren Bodenbearbeitungsgeräten als Team bearbeitet. Die Steuerung und Verwaltung des Bodenbearbeitungssystems aus mehreren Bodenbearbeitungsgeräten erfolgt insbesondere über eine zentrale Steuereinheit wie einen Server. Die Steuereinheit kann in einer Basisstation oder einer Ladestation des Bodenbearbeitungssystems vorgesehen sein. Es kann auch vorteilhaft sein, einen externen Server als zentrale Steuereinheit zu nutzen.

Weitere vorteilhafte Ausführungsbeispiele der Erfindung ergeben sich durch beliebige Kombination der angegebenen Merkmale und der beschriebenen Ausführungsbeispiele.

Weitere Merkmale der Erfindung ergeben sich aus den weiteren Ansprüchen, der Beschreibung und der Zeichnung, in der nachfolgend ein im Einzelnen beschriebenes Ausführungsbeispiel der Erfindung dargestellt ist. Es zeigen:
- Fig. 1: in schematischer Darstellung ein Bodenbearbeitungssystem mit zumindest einem in einem Arbeitsbereich selbstfahrenden Bodenbearbeitungsgerät,
- Fig. 2: in schematischer Darstellung den Aufbau eines Bodenbearbeitungsgerätes am Beispiel eines selbstfahrenden Rasenmähers,
- Fig. 3: in schematischer Darstellung die Vorgabe einer Intensivgrenze zur Bestimmung einer Intensivzone.

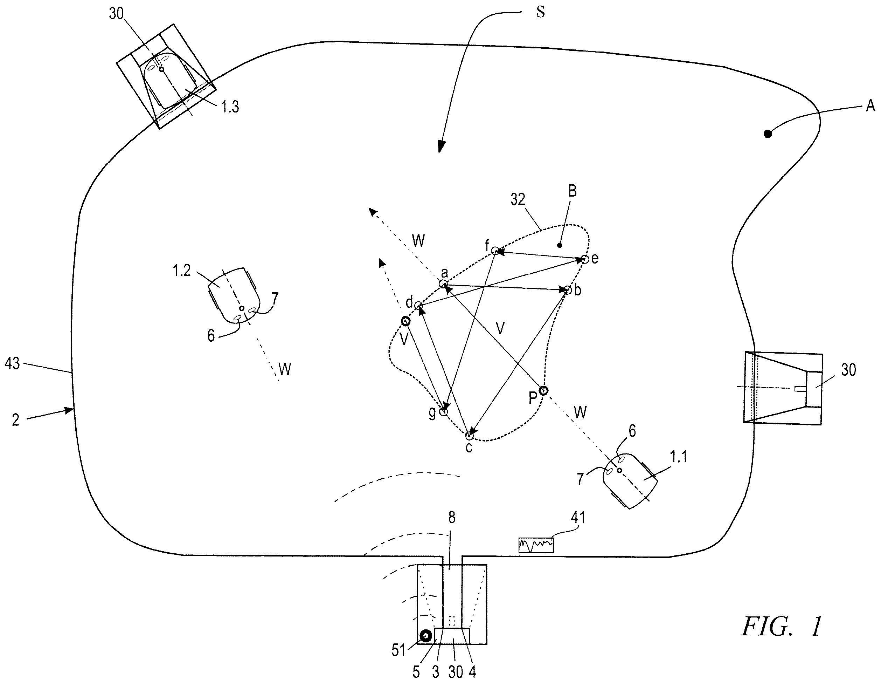

Das in Fig. 1 dargestellte Bodenbearbeitungssystem S umfasst zumindest ein selbstfahrendes Bodenbearbeitungsgerät 1.1, 1.2 und 1.3 zur Bearbeitung eines vorgegebenen Arbeitsbereiches A. Im Ausführungsbeispiel sind mehrere, insbesondere drei Bodenbearbeitungsgeräte 1.1, 1.2 und 1.3 zur gemeinsamen Bearbeitung des vorgegebenen Arbeitsbereiches A gezeigt. Das Bodenbearbeitungsgerät 1.3 ist in eine Ladestation 30 eingefahren dargestellt. Das Bodenbearbeitungssystem S kann weniger oder auch mehr Bodenbearbeitungsgeräte umfassen. Jedes einzelne Bodenbearbeitungsgerät 1.1, 1.2 und 1.3 arbeitet autonom und fährt innerhalb des Arbeitsbereiches A selbstständig einen zufälligen, vorgegebenen oder selbstständig geplanten Arbeitsweg W ab.

Im gezeigten Ausführungsbeispiel nach Fig. 1 ist der Arbeitsbereich A des Bodenbearbeitungssystems S durch eine Randbegrenzung 2 bestimmt. Die Randbegrenzung 2 kann vielfältig ausgebildet sein. So kann die Randbegrenzung 2 durch Kartenkoordinaten einer im Bodenbearbeitungsgerät abgespeicherten Karte, durch Funkbaken, durch GPS-Satelliten oder dgl. ausgebildet sein. Im gezeigten Ausführungsbeispiel ist die Randbegrenzung 2 durch einen körperlichen Draht 43 gebildet. Der beispielhaft gezeigte Draht 43 ist insbesondere als geschlossene Drahtschleife verlegt, wobei die Enden 3, 4 der Drahtschleife an eine Sendeeinheit 5 einer Basisstation 8 angeschlossen sind. Die Sendeeinheit 5 sendet - bevorzugt in zeitlich festen Abständen - elektrische Drahtsignale 41 auf den Draht 43. Die Drahtsignale 41 bewirken ein elektromagnetisches Feld, welches von Empfangsspulen 6 und 7 innerhalb des Arbeitsbereiches A von einem Bodenbearbeitungsgerät 1.1, 1.2, 1.3 empfangen werden.

In Fig. 1 ist die Basisstation 8 als Ladestation 30 ausgebildet. Wie Fig. 1 zeigt, sind entlang der als Draht 43 ausgebildeten Randbegrenzung 2 weitere Ladestationen 30 vorgesehen.

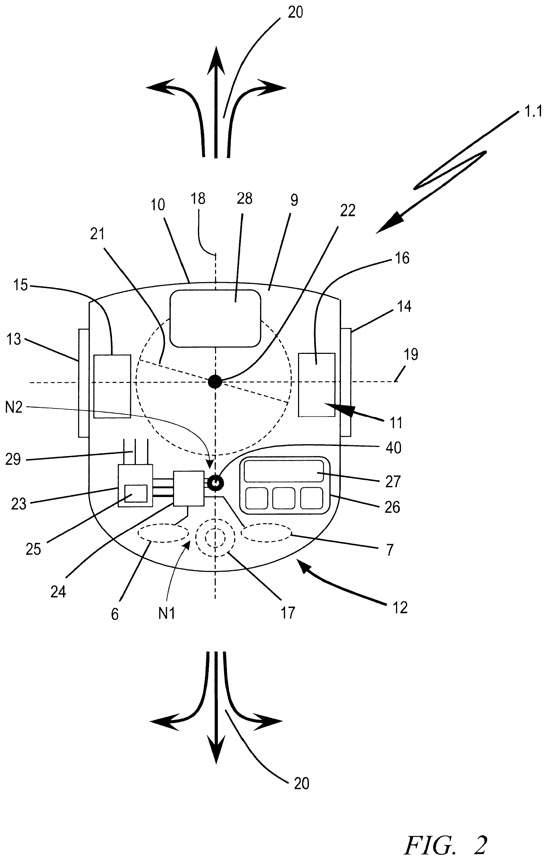

In Fig. 2 ist in Draufsicht schematisch ein Bodenbearbeitungsgerät 1.1 gezeigt, welches als Rasenmäher 10 ausgebildet ist. Die Darstellung des autonom arbeitenden, selbstfahrenden Rasenmähers 10 ist beispielhaft. Das Bodenbearbeitungsgerät 1.1 kann auch als Vertikutierer, Kehrmaschine, Staubsauger, autonom fahrender Aufsitzmäher oder dgl. Bodenbearbeitungsgerät ausgebildet sein.

Das in Fig. 2 als Rasenmäher 10 dargestellte Bodenbearbeitungsgerät 1.1 besteht im Wesentlichen aus einem Fahrwerk mit hinteren Antriebsrädern 13, 14 mit einem Antrieb 11. Im Ausführungsbeispiel ist jedem Antriebsrad 13, 14 ein elektrischer Antriebsmotor 15, 16 zugeordnet, so dass die Antriebsräder 13 und 14 zur Richtungssteuerung des Rasenmähers 10 mit unterschiedlicher Drehzahl und/oder in unterschiedlicher Drehrichtung angetrieben werden können. Der Antrieb 11 besteht aus zwei voneinander unabhängig ansteuerbaren Elektromotoren.

Im vorderen Bereich 12 des Gehäuses 9 des Bodenbearbeitungsgerätes 1.1 ist ein insbesondere selbstlenkendes drittes Rad 17 vorgesehen. Das dritte Rad 17 liegt vorzugsweise auf einer Längsmittelachse 18 des Gehäuses 9. Die Ausbildung eines Fahrgestells mit vier Rädern kann zweckmäßig sein.

Die Antriebsräder 13, 14 des gezeigten Bodenbearbeitungsgerätes 1.1 drehen um eine gemeinsame Antriebsachse 19. Die Antriebsachse 19 liegt - in Draufsicht auf den Rasenmäher 10 nach Fig. 2 - insbesondere rechtwinklig zur Längsmittelachse 18 des Gehäuses 9. Für eine Geradeausfahrt sind die Antriebsräder 13 und 14 über ihre elektrischen Antriebsmotoren 15 und 16 synchron anzutreiben. Für eine Kurvenfahrt werden die Antriebsräder 13, 14 durch ihre Antriebsmotoren 15, 16 z. B. mit unterschiedlichen Drehzahlen angetrieben. Durch den Antrieb 11 ist das Bodenbearbeitungsgerät 1.1 in jeder gewünschten Fahrtrichtung 20 gemäß den dargestellten Pfeilen vorwärts oder rückwärts zu bewegen.

Im Ausführungsbeispiel nach Fig. 2 weist das Bodenbearbeitungsgerät 1.1 zwischen den Antriebsrädern 13 und 14 ein Arbeitswerkzeug 21 auf. Im Ausführungsbeispiel als Rasenmäher 10 ist das Arbeitswerkzeug 21 ein um eine senkrechte Drehachse 22 rotierendes Schneidmesser.

Die Steuerung der elektrischen Antriebsmotoren 15 und 16 zum Bewegen des Bodenbearbeitungsgerätes 1.1 auf einem Arbeitsweg W erfolgt über eine Steuereinheit 23, die über schematisch angedeutete elektrische Leitungen 29 mit den elektrischen Antriebsmotoren 15 und 16 verbunden ist.

Das auf der Drahtschleife des Drahtes 43 gesendete Drahtsignal 41 wird in den Empfangsspulen 6 und 7 des Bodenbearbeitungsgerätes 1.1 empfangen. Die Empfangsspulen 6 und 7 liegen im vorderen Bereich 12 des Gehäuses 9 jeweils auf einer Seite der Längsmittelachse 18 des Bodenbearbeitungsgerätes 1.1. Die in den Empfangsspulen 6 und 7 induzierten Empfangssignale werden einer gemeinsamen Auswerteeinheit 24 zugeführt, die mit der Steuereinheit 23 verbunden ist. Die Empfangsspulen 6 und 7 bilden zusammen mit der Auswerteeinheit 24 eine erste Navigationseinheit N1 des Bodenbearbeitungsgerätes 1.1.

Vorteilhaft umfasst die Steuereinheit 23 einen Speicher 25 für eine Betriebsvariable, die zum Betrieb des Bodenbearbeitungsgerätes 1.1 zweckmäßig ist. Eine derartige Betriebsvariable kann z. B. die Startzeit des Betriebs sein, die Gesamtdauer des Betriebs, die Schnitthöhe (bei einer Ausbildung als Rasenmäher), der Fahrweg zu einer Ladestation, ein Mähplan als Wochenplan oder dgl. Betriebsvariable.

In Fig. 2 ist zur Eingabe von Informationen zur Betriebsvariablen durch den Benutzer ein Eingabefeld 26 vorgesehen, welches vorteilhaft einen Bildschirm 27 und Eingabetasten aufweist. Es kann zweckmäßig sein, den Bildschirm als Touchscreen auszubilden, so dass Eingabetasten entfallen können.

Das Bodenbearbeitungsgerät 1.1 gemäß Fig. 2 weist ferner einen weiteren Empfänger 40 auf, der zusammen mit der Auswerteeinheit 24 und der Steuereinheit 23 eine weitere Navigationseinheit N2 bildet. Der Empfänger 40 empfängt vorteilhaft Funksignale von Funkbaken, Satellitendaten zur GPS-Navigation oder dgl. Die Kommunikationsverbindung des Empfängers 40 mit einem Sender kann auch als WLAN-Verbindung, Bluetooth-Verbindung, GSM-Verbindung, NFC-Verbindung oder dgl. drahtlosen Verbindungen, insbesondere Nahfeldverbindungen sein.

Die Bodenbearbeitungsgeräte 1.1, 1.2, 1.3 können insbesondere so ausgebildet sein, dass sie, z. B. über eine Funkverbindung, mit einer Steuereinheit 51 kommunizieren, welche eine zentrale Verwaltung und Steuerung der Bodenbearbeitungsgeräte 1.1, 1.2, 1.3 ermöglicht. Die Steuereinheit 51 kann in einer Basisstation 8 oder einer Ladestation des Bodenbearbeitungssystems S vorgesehen sein, Wie Fig. 1 zeigt. Auch kann ein übergeordneter, externer Server vorteilhaft sein, um Betriebsvariable des einzelnen Bodenbearbeitungsgerätes 1.1, 1.2, 1.3 von der zentralen Steuereinheit 51 aus einzugeben, zu erneuern oder anzupassen.

Die elektrische Versorgung der Steuereinheit 23 und aller ihrer Komponenten, die elektrische Versorgung des elektrischen Antriebs 11 sowie die elektrische Versorgung des Empfängers 40 wird durch einen bordeigenen Akku 28 gewährleistet. Der Akku 28 ist bevorzugt in das Gehäuse 9 des Bodenbearbeitungsgerätes 1.1 eingeschoben. Im Betrieb des Bodenbearbeitungssystems S wird ein Bodenbearbeitungsgerät 1.1, 1.2 und 1.3 unabhängig voneinander in dem zu bearbeitenden maximalen Arbeitsbereich A durch entsprechende Ansteuerung der Antriebsmotoren 15 und 16 auf einem Arbeitswerg W verfahren. Jedes einzelne Bodenbearbeitungsgerät 1.1, 1.2 und 1.3 arbeitet autonom entsprechend der Information einer in seinem Speicher 25 abgelegten Betriebsvariablen.

Wie in Fig. 1 dargestellt, ist vorzugsweise innerhalb des Arbeitsbereiches A eine Intensivzone B ausgebildet. Die Intensivzone B ist durch eine Intensivgrenze 32 bestimmt. Im gezeigten Ausführungsbeispiel ist die Intensivgrenze 32 geschlossen, so dass sich eine von der Intensivgrenze 32 vollständig umgebene Intensivzone B ergibt. Innerhalb eines Arbeitsbereiches A können mehrere Intensivzonen vorgesehen sein. Eine Überlappung von Intensivzonen kann zweckmäßig sein. Bei überlappenden Intensivzonen kann eine von zwei Intensivzonen überdeckte Zone mit erhöhtem Bearbeitungsaufwand bearbeitet werden.

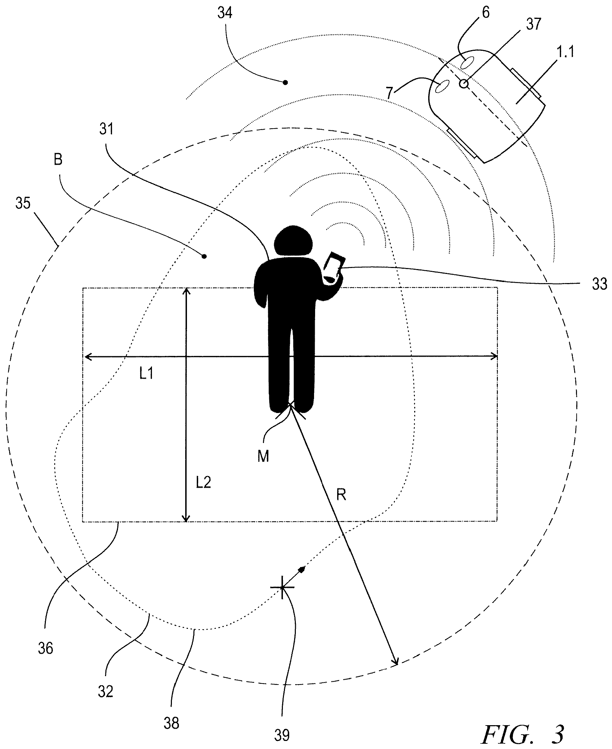

In vorteilhafter Ausgestaltung der Erfindung ist die Intensivgrenze 32 eine virtuelle Grenze, die durch den Benutzer jederzeit veränderbar ist. Eine virtuelle Grenze wird elektronisch gesetzt, wozu der Benutzer 31 (Fig. 3) sich elektronischer Hilfsmittel 33 bedienen kann. Derartige elektronische Hilfsmittel 33 können ein elektronisches Bedienteil, ein Smartphone, ein Tablet oder dgl. moderne Kommunikationsmittel sein.

In einer einfachen Ausführungsform der Erfindung nutzt der Benutzer 31 als elektronisches Hilfsmittel 33 ein Smartphone und startet auf diesem die Ortsbestimmung durch Aktivierung der GPS-Satellitennavigation, wie Fig. 3 zeigt. Nunmehr bestimmt der Benutzer durch Bedienung einer auf dem Smartphone gestarteten Applikation eine Intensivzone mit z. B. kreisförmiger Grundform 35. Hierzu kann der Benutzer 31 z. B. den Radius R des Kreises um seinen Standpunkt M eingeben. Nach Festlegen der Intensivzone auf dem elektronischen Hilfsmittel 33 werden die durch die Applikation generierten GPS-Daten drahtlos per Funkverbindung 34 an einen geeigneten Empfänger 37 des Bodenbearbeitungsgerätes 1.1 übertragen. Die über die Funkverbindung erhaltenen Daten werden im Speicher 25 als zu berücksichtigende Intensivzone B abgespeichert.

Wie Fig. 3 ferner zeigt, kann der Benutzer - bezogen auf seinen Standpunkt M - auch eine Intensivzone in rechteckiger Grundform 36 definieren, indem er die Seitenlängen L1 und L2 des Rechtecks in die Applikation eingibt. Die Übertragung der Intensivgrenzen 32 der Intensivzone in der Grundform 36 eines Rechtecks erfolgt - wie vorstehend beschrieben - über die Funkverbindung 34.

Die Applikation auf dem elektronischen Hilfsmittel 33, insbesondere einem Smartphone oder einem Tablet, kann auch so ausgebildet sein, dass eine Intensivzone B beliebiger Grundform 38 gebildet werden kann. So kann z. B. der Benutzer mit aktivierter Erfassung der GPS-Daten ausgehend von einem Startpunkt 39 die gewünschte Intensivgrenze 32 in Pfeilrichtung vom Startpunkt 39 ablaufen, bis er wieder an den Startpunkt 39 trifft. Die Applikation generiert einen entsprechenden Track, der als Intensivgrenze 32 der Intensivzone B über die Funkverbindung 34 dem Bodenbearbeitungsgerät 1.1 übermittelt wird.

In einem Bodenbearbeitungssystem S können ein oder mehrere Bodenbearbeitungsgeräte 1.1, 1.2 und 1.3 insbesondere als Team betrieben werden. Es kann ausreichend sein, nur an einem Bodenbearbeitungsgerät 1.1 die zur Definition der Intensivzone B vorgegebene Intensivgrenze 32 einzugeben. Dies hat zur Folge, dass die Bodenbearbeitungsgeräte 1.2 und 1.3 die Intensivzone B ignorieren. Überfährt hingegen das Bodenbearbeitungsgerät 1.1 die Intensivgrenze 32 im Punkt P, schaltet die Steuereinheit 23 auf einen Intensivmodus um.

Insbesondere wenn der Arbeitsbereich A und die mindestens eine Intensivzone B von mehreren Bodenbearbeitungsgerätenl. 1, 1.2, 1.3 bearbeitet werden, erfolgt die Steuerung und Verwaltung der mehreren Bodenbearbeitungsgeräten 1.1, 1.2, 1.3 zweckmäßig über eine zentrale Steuereinheit, der z. B. als Server ausgebildet sein kann. So kann ein Team aus einer beliebigen Anzahl von Bodenbearbeitungsgeräten 1.1, 1.2, 1.3 über einen zentralen Server z. B. die Verteilung der Häufigkeiten der Bearbeitung von Intensivzonen B entsprechend der Anzahl der in dem Arbeitsbereich A verfügbaren Bodenbearbeitungsgeräte 1.1, 1.2, 1.3 verwaltet werden. Auch kann über eine Kommunikation zwischen den Bodenbearbeitungsgeräten 1.1, 1.2, 1.3 und z. B. einem Server als zentrale Steuereinheit des Teams eine Anpassung der Betriebszeiten ebenso vorgenommen werden wie eine Änderung von in dem Bodenbearbeitungsgerät 1.1, 1.2, 1.3 gespeicherten Betriebsvariablen.

Im Intensivmodus wird das Bodenbearbeitungsgerät 1.1 derart gesteuert, dass es insbesondere ausschließlich innerhalb der Intensivgrenze 32 der Intensivzone B arbeitet. Dieses Umschalten in den Intensivmodus erfolgt im gezeigten Ausführungsbeispiel bei einem erstmaligen Überfahren der Intensivgrenze 32 im Punkt P.

Das Bodenbearbeitungsgerät 1.1 arbeitet innerhalb der Intensivzone B in entsprechender Weise wie es im maximalen Arbeitsbereich A arbeitet. Die Steuerung erfolgt jedoch so, dass die elektronisch gesetzte Intensivgrenze 32 nicht überfahren wird; das Bodenbearbeitungsgerät 1.1 bewegt sich somit innerhalb der Intensivzone B selbstständig auf einem zufälligen, vorgegebenen oder selbstständig geplanten Weg. Dabei erfolgt bei Annäherung an die Intensivgrenze 32, spätestens aber bei Erreichen der Intensivgrenze 32, eine Richtungsänderung, wie die in Fig. 1 gezeigten Richtungspfeile zeigen.

Ein im Bodenbearbeitungsgerät 1.1 geschalteter Intensivmodus wird insbesondere nach Erreichen eines zweckmäßig im Bodenbearbeitungsgerät 1.1 gespeicherten, vorgegebenen Abschaltparameters beendet. In einer einfachen Ausgestaltung ist der Abschaltparameter als vorgegebene Zeitdauer gewählt. Der Intensivmodus wird nach einer vorgegebenen Zeitdauer, z. B. zweckmäßig nach der Aufenthaltsdauer des Bodenbearbeitungsgerätes 1.1 innerhalb der Intensivzone B, beendet. Der Intensivmodus kann nach einer vom Benutzer vorgegebenen Zeitdauer beendet werden. Diese Zeitdauer kann z. B. dann gestartet werden, wenn das Bodenbearbeitungsgerät 1.1 erstmalig im Punkt P die Intensivgrenze 32 überfährt. Beispielhaft ist eine Zeitdauer z. B. 3 min bis 10 min. Diese Zeitdauer kann unabhängig von den Richtungsänderungen des Bodenbearbeitungsgerätes innerhalb der Intensivzone B sein und nur durch die Aufenthaltszeit des Bodenbearbeitungsgerätes 1.1 innerhalb der Intensivzone bestimmt sein.

Der Abschaltparameter kann auch anhand von aktuellen Betriebsdaten des Bodenbearbeitungsgerätes 1.1 bestimmt werden. So kann ein Abschaltparameter als eine vorgegebene Anzahl von Richtungsänderungen des Bodenbearbeitungsgerätes innerhalb der Intensivzone B festgelegt sein. Werden z. B. fünfzehn Richtungsänderungen als Abschaltparameter vorgegeben, so wird der Intensivmodus nach Erreichen der vorgegebenen Anzahl von Richtungsänderungen beendet. Immer dann, wenn das Bodenbearbeitungsgerät die Intensivgrenze erreicht, wird es die Fahrtrichtung ändern, um innerhalb der Intensivzone zu bleiben. Ist die vorgegebene Anzahl von Richtungsänderungen ausgeführt, wird der Intensivmodus beendet. Die tatsächliche Aufenthaltsdauer des Bodenbearbeitungsgerätes innerhalb der Intensivzone kann dabei variieren.

In einer bevorzugten Ausführungsform der Erfindung ist vorgesehen, dass nach dem Einschalten des Intensivmodus durch Überfahren des Punktes P der Intensivgrenze 32 ein im Bodenbearbeitungsgerät vorgesehener Zähler aktiviert wird. Dieser - vorzugsweise in der Steuereinheit 23 integrierte - Zähler kann zweckmäßig von einem vorgegebenen Zählerstand auf "Null" zurückzählen. Im gezeigten Ausführungsbeispiel wird bei jeder Richtungsänderung der Zähler um ein Inkrement heruntergezählt. Fährt somit das Bodenbearbeitungsgerät 1.1 auf seinem Arbeitsweg W bis zum Wendepunkt a, erfolgt eine erste Richtungsänderung in Richtung auf den Wendepunkt b. In b erfolgt eine zweite Richtungsänderung zum Wendepunkt c. Dort erfolgen eine dritte Richtungsänderung zum Wendepunkt d und weitere Richtungsänderungen zu den Wendepunkten e, f und g. Ist der Zähler beim Start z. B. auf die Zahl "7" gesetzt, wird im jedem Wendepunkt der Zähler um ein Inkrement abwärts gezählt, so dass er nach sieben Richtungsänderungen in den Wendepunkten a bis g den Intensivmodus beendet. Auf seinem Fahrweg vom Wendepunkt g zur Intensivgrenze 32 wird er die Intensivzone B im Punkt V verlassen. Die Intensivzone ist abgearbeitet.

Es kann auch vorgesehen sein, den Abschaltparameter in Form einer Wegstrecke vorzugeben, z. B. nach der vorgegebenen, abgefahrenen Distanz des Fahrwegs des Bodenbearbeitungsgerätes 1.1 innerhalb der Intensivzone B.

Überfährt das Bodenbearbeitungsgerät 1.1 bei seiner weiteren Arbeit im Arbeitsbereich A erneut die Intensivgrenze 32, erfolgt keine Reaktion des Bodenbearbeitungsgerätes. Nach dem Ausführungsbeispiel wird dann und nur dann in den Intensivmodus geschaltet, wenn das Bodenbearbeitungsgerät 1.1 erstmals die Intensivgrenze 32 überfährt. Ein zweites, drittes, viertes Überfahren usw. hat keine Umschaltung in den Intensivmodus des Bodenbearbeitungsgerätes zur Folge.

Hierzu kann in besonderer Weiterbildung der Erfindung vorgesehen sein, ein abgeschlossenes Bearbeiten einer jeweiligen Intensivzone B über eine Zustandsvariable zu beschreiben, die im Bodenbearbeitungsgerät z. B. im Speicher 25 abgespeichert ist. Die Zustandsvariable kann z. B. ein gesetztes Flag sein, das als Statusindikator anzeigt, ob eine Bearbeitung abgeschlossen ist. Ist der Statusindikator gesetzt, z. B. auf" 1" gesetzt, wird das Bodenbearbeitungsgerät bei einem erneuten Einfahren in eine Intensivzone nicht erneut in den Intensivmodus geschaltet. Nur wenn das Flag nicht gesetzt ist, z. B. "0" ist, wird nach der Erfindung bei einem Einfahren in eine Intensivzone zur Bearbeitung der Intensivzone in den Intensivmodus geschaltet. Das Bodenbearbeitungsgerät wird nur in Abhängigkeit von dem Wert der Zustandsvariablen in den Intensivmodus schalten.

Vorteilhaft wird die abgespeicherte Zustandsvariable des Bodenbearbeitungsgerätes 1.1 in Abhängigkeit von zumindest einer Betriebsvariablen des Bodenbearbeitungsgerätes 1.1 zurückgesetzt. Die Zustandsvariable wird vorteilhaft durch einen vorgegebenen Wert einer ausgewählten Betriebsvariablen des Bodenbearbeitungsgerätes 1.1 zurückgesetzt. In einer ersten Ausführungsform kann die ausgewählte Betriebsvariable eine Betriebsdauer des Bodenbearbeitungsgerätes 1.1 sein. In einer zweiten Ausführungsform kann als ausgewählte Betriebsvariable die Wegstrecke des zurückgelegten Fahrwegs des Bodenbearbeitungsgerätes 1.1 genutzt werden. In einer dritten Ausführungsform kann eine Anzahl von Richtungsänderungen des Bodenbearbeitungsgerätes 1.1 die ausgewählte Betriebsvariable sein. In einer vierten Ausführungsform kann eine Anzahl des Überfahrens einer Intensivgrenze 32 einer Intensivzone B durch das Bodenbearbeitungsgeräte 1.1 als ausgewählte Betriebsvariable genutzt werden. Die vorstehend alternativ genannten ausgewählten Betriebsvariablen des Bodenbearbeitungsgerätes 1.1 können auch in beliebiger Kombination miteinander ein Zurücksetzen der Zustandsvariablen bewirken.

In einer weiteren Ausgestaltung kann im Betrieb des Bodenbearbeitungssystems S der Intensivmodus mit jeder erneuten Inbetriebnahme des Bodenbearbeitungssystems S erneut gestartet werden. Es kann auch zweckmäßig sein, den Intensivmodus in Abhängigkeit einer vorgegebenen Betriebsdauer erneut freizuschalten, um ihn dann bei einem erstmaligen Überfahren der Intensivgrenze 32 wieder zu aktivieren.

## Patentansprüche

1. Bodenbearbeitungssystem umfassend ein elektronisches Hilfsmittel und mindestens ein selbstfahrendes Bodenbearbeitungsgerät (1.1, 1.2, 1.3), wobei das Bodenbearbeitungsgerät (1.1, 1.2, 1.3) einen Antrieb (11), eine Steuereinheit (23) und einen bordeigenen Akku (28) zur Energieversorgung des Bodenbearbeitungsgerätes (1.1, 1.2, 1.3) aufweist, und mit einem durch eine Randbegrenzung (2) bestimmten Arbeitsbereich (A) des Bodenbearbeitungsgerätes (1.1, 1.2, 1.3), wobei das Bodenbearbeitungsgerät (1.1, 1.2, 1.3) eingerichtet ist, innerhalb des Arbeitsbereichs (A) einen von der Steuereinheit (23) bestimmten Arbeitsweg (W) zu fahren, wobei innerhalb des Arbeitsbereichs (A) des Bodenbearbeitungsgerätes (1.1, 1.2, 1.3) mindestens eine Intensivgrenze (32) vorgegeben ist und eine Intensivgrenze (32) jeweils eine Intensivzone (B) abgrenzt, und das Bodenbearbeitungsgerät (1.1, 1.2, 1.3) eingerichtet ist, in einem Intensivmodus innerhalb der Intensivgrenzen (32) seine Fahrwege auszuführen und in dem Intensivmodus jeweils mit Annäherung oder Erreichen der Intensivgrenze (32) seine Fahrtrichtung zu ändern, um innerhalb der Intensivzone (B) zu bleiben, und das Bodenbearbeitungsgerät (1.1, 1.2, 1.3) eingerichtet ist, in dem Intensivmodus derart gesteuert zu werden, dass es innerhalb der gesetzten Intensivgrenzen (32) der Intensivzone (B) arbeitet, so dass die Intensivzone (B) bevorzugt bearbeitet ist,
wobei die Intensivgrenze (32) eine elektronisch gesetzte, virtuelle Grenze ist, wobei die virtuelle Grenze mittels des elektronischen Hilfsmittels (33) durch den Benutzer (31) elektronisch gesetzt ist, wobei das elektronische Hilfsmittel (33) ein elektronisches Bedienteil, ein Smartphone, oder ein Tablet ist wobei das Hilfsmittel eine Applikation umfasst, so dass auf diesem Hilfsmittel der Benutzer (31) durch Bedienung der gestarteten Applikation eine Intensivzone bestimmen kann, **dadurch gekennzeichnet, dass** die Applikation so ausgebildet ist, dass ein Intensivbereich (B) beliebiger Grundform (38) gebildet werden kann.

2. Bodenbearbeitungssystem nach Anspruch 1, so eingerichtet, dass das Bodenbearbeitungsgerät (1.1, 1.2, 1.3) bei Überfahren einer Intensivgrenze (32) in den Intensivmodus schaltet.

3. Bodenbearbeitungssystem nach Anspruch 1,
**dadurch gekennzeichnet, dass** das Bodenbearbeitungsgerät (1.1, 1.2, 1.3) eingerichtet ist, im Intensivmodus derart gesteuert zu werden, dass es jeweils nur innerhalb der Intensivgrenzen (32) in der Intensivzone (B) arbeitet.

4. Bodenbearbeitungssystem nach Anspruch 1,
**dadurch gekennzeichnet, dass** das Bodenbearbeitungsgerät (1.1, 1.2, 1.3) eingerichtet ist, bei einem erstmaligen Überfahren der Intensivgrenze (32) in den Intensivmodus zu schalten.

5. Bodenbearbeitungssystem nach Anspruch 1,
**dadurch gekennzeichnet, dass** das Bodenbearbeitungsgerät (1.1, 1.2, 1.3) eingerichtet ist, den Intensivmodus des Bodenbearbeitungsgerätes (1.1, 1.2, 1.3) nach Erreichen eines vorgegebenen Abschaltparameters zu beenden.

6. Bodenbearbeitungssystem nach Anspruch 5,
**dadurch gekennzeichnet, dass** der Abschaltparameter eine vorgegebene Zeitdauer ist, eine vorgegebene Anzahl von Richtungsänderungen des Bodenbearbeitungsgerätes (1.1, 1.2, 1.3) innerhalb der Intensivzone (B) ist und/oder eine vorgegebene, abgefahrene Distanz des Fahrwegs (W) des Bodenbearbeitungsgerätes (1.1, 1.2, 1.3) innerhalb der Intensivzone (B) ist.

7. Bodenbearbeitungssystem nach Anspruch 1,
**dadurch gekennzeichnet, dass** im Bodenbearbeitungsgerät (1.1, 1.2, 1.3) durch eine Zustandsvariable ein abgeschlossenes Bearbeiten einer jeweiligen Intensivzone (B) abgespeichert ist.

8. Bodenbearbeitungssystem nach Anspruch 7, so eingerichtet,
dass in Abhängigkeit der Zustandsvariablen das Bodenbearbeitungsgerät (1.1, 1.2, 1.3) in den Intensivmodus schaltet.

9. Bodenbearbeitungssystem nach Anspruch 7,
**dadurch gekennzeichnet, dass** das Bodenbearbeitungsgerät (1.1, 1.2, 1.3) eingerichtet ist, die Zustandsvariablen des Bodenbearbeitungsgerätes (1.1, 1.2, 1.3) in Abhängigkeit von ausgewählten Betriebsvariablen des Bodenbearbeitungsgerätes (1.1, 1.2, 1.3) zurückzusetzen.

10. Bodenbearbeitungssystem nach Anspruch 9,
**dadurch gekennzeichnet, dass** eine ausgewählte Betriebsvariable durch eine Betriebsdauer des Bodenbearbeitungsgerätes (1.1, 1.2, 1.3), eine Distanz des zurückgelegten Fahrwegs (W) des Bodenbearbeitungsgerätes (1.1, 1.2, 1.3), eine Anzahl von Richtungsänderungen des Bodenbearbeitungsgerätes (1.1, 1.2, 1.3) und/oder eine Anzahl des Überfahrens einer Intensivgrenze (32) einer Intensivzone (B) durch das Bodenbearbeitungsgerät (1.1, 1.2, 1.3) gebildet ist.

11. Bodenbearbeitungssystem nach Anspruch 1,
**dadurch gekennzeichnet, dass** das Bodenbearbeitungsgerät (1.1, 1.2, 1.3) eine erste, mit der Randbegrenzung (2) des Arbeitsbereichs (A) zusammenwirkende erste Navigationseinheit (N1), die aus Empfangsspulen (6, 7) und einer Auswerteeinheit (24) besteht, und mindestens eine mit der Intensivgrenze (32) zusammenwirkende, weitere Navigationseinheit (N2) aufweist, die aus einem Empfänger (40), der Auswerteeinheit (24) und der Steuereinheit (23) besteht.

12. Bodenbearbeitungssystem nach Anspruch 11,
**dadurch gekennzeichnet, dass** die Navigationseinheiten (N1, N2) an eine gemeinsame Steuereinheit (23) angeschlossen sind.

13. Bodenbearbeitungssystem nach Anspruch 1,
**dadurch gekennzeichnet, dass** eine gemeinsame Navigationseinheit für die Randbegrenzung (2) und die Intensivgrenze (32) vorgesehen ist.

14. Bodenbearbeitungssystem nach Anspruch 1,
**dadurch gekennzeichnet, dass** die Randbegrenzung (2) des Arbeitsbereichs (A) durch einen verlegten Draht (43) gebildet ist.

15. Bodenbearbeitungssystem nach Anspruch 14, so eingerichtet,
dass auf dem Draht (43) ein Drahtsignal (41) gesendet ist, dass das Drahtsignal (41) in einer Empfangsspule (6, 7) des Bodenbearbeitungsgerätes (1.1, 1.2, 1.3) ein Empfangssignal induziert und das Empfangssignal zur Steuerung des Bodenbearbeitungsgerätes (1.1, 1.2, 1.3) innerhalb des Arbeitsbereiches (A) verwendet ist.

16. Bodenbearbeitungssystem nach Anspruch 1,
**dadurch gekennzeichnet, dass** das Bodenbearbeitungsgerät (1.1, 1.2, 1.3) ein selbstfahrender Rasenmäher (10) ist.

17. Bodenbearbeitungssystem nach Anspruch 16 umfassend mehrere Bodenbearbeitungsgeräte (1.1, 1.2, 1.3),
wobei das Bodenbearbeitungssystem so eingerichtet ist,
dass der Arbeitsbereich und die mindestens eine Intensivzone von mehreren Bodenbearbeitungsgeräten (1.1, 1.2, 1.3) bearbeitet wird und die Steuerung und Verwaltung der mehreren Bodenbearbeitungsgeräten (1.1, 1.2, 1.3) über eine zentrale Steuereinheit wie einen Server erfolgt.

## Claims

1. Ground working system comprising an electronic aid and at least one self-driving ground working device (1.1, 1.2, 1.3), wherein the ground working device (1.1, 1.2, 1.3) has a drive (11), a control unit (23) and an in-device battery (28) for supplying energy to the ground working device (1.1, 1.2, 1.3), and with an operating region (A) of the ground working device (1.1, 1.2, 1.3) determined by an edge boundary (2), wherein the ground working device (1.1, 1.2, 1.3) is set up to travel over an operating path (W) determined by the control unit (23) within the operating region (A), wherein at least one intensive limit (32) is predetermined within the operating region (A) of the ground working device (1.1, 1.2, 1.3) and an intensive limit (32) in each case demarcates an intensive zone (B), and the ground working device (1.1, 1.2, 1.3) is set up to complete its travelling paths within the intensive limits (32) in an intensive mode and to change its direction of travel in each case when it approaches or reaches the intensive limit (32) in the intensive mode, in order to remain within the intensive zone (B), and the ground working device (1.1, 1.2, 1.3) is set up to be controlled in the intensive mode in such a way that it operates within the set intensive limits (32) of the intensive zone (B), so that the intensive zone (B) is worked with preference, wherein the intensive limit (32) is an electronically set, virtual limit, wherein the virtual limit is set electronically by the user (31) by means of the electronic aid (33), wherein the electronic aid (33) is an electronic operator control element, a smartphone or a tablet, wherein the aid comprises an application, so that, by operating the started application, the user (31) can determine an intensive zone on this aid, **characterized in that** the application is designed such that an intensive region (B) of any desired basic form (38) can be formed.

2. Ground working system according to claim 1,
set up such that the ground working device (1.1, 1.2, 1.3) switches to the intensive mode when it passes over an intensive limit (32).

3. Ground working system according to claim 1,
**characterized in that** the ground working device (1.1, 1.2, 1.3) is set up to be controlled in the intensive mode in such a way that it operates in each case only within the intensive limits (32) in the intensive zone (B).

4. Ground working system according to claim 1,
**characterized in that** the ground working device (1.1, 1.2, 1.3) is set up to switch to the intensive mode when it passes over the intensive limit (32) for the first time.

5. Ground working system according to claim 1,
**characterized in that** the ground working device (1.1, 1.2, 1.3) is set up to end the intensive mode of the ground working device (1.1, 1.2, 1.3) after reaching a predetermined switch-off parameter.

6. Ground working system according to claim 5,
**characterized in that** the switch-off parameter is a predetermined time period, a predetermined number of changes in direction of the ground working device (1.1, 1.2, 1.3) within the intensive zone (B) and/or a predetermined distance of the travelling path (W) covered by the ground working device (1.1, 1.2, 1.3) within the intensive zone (B).

7. Ground working system according to claim 1,
**characterized in that** completed working of a respective intensive zone (B) is stored in the ground working device (1.1, 1.2, 1.3) by a state variable.

8. Ground working system according to claim 7,
set up such that the ground working device (1.1, 1.2, 1.3) switches to the intensive mode in dependence on the state variable.

9. Ground working system according to claim 7,
**characterized in that** the ground working device (1.1, 1.2, 1.3) is set up to reset the state variable of the ground working device (1.1, 1.2, 1.3) in dependence on selected operating variables of the ground working device (1.1, 1.2, 1.3).

10. Ground working system according to claim 9,
**characterized in that** a selected operating variable is formed by an operating time of the ground working device (1.1, 1.2, 1.3), a distance of the travelling path (W) covered by the ground working device (1.1, 1.2, 1.3), a number of changes in direction of the ground working device (1.1, 1.2, 1.3) and/or a number of times an intensive limit (32) of an intensive zone (B) is passed over by the ground working device (1.1, 1.2, 1.3).

11. Ground working system according to claim 1,
**characterized in that** the ground working device (1.1, 1.2, 1.3) has a first, first navigation unit (N1), interacting with the edge boundary (2) of the operating region (A) and consisting of reception coils (6, 7) and an evaluation unit (24), and at least one further navigation unit (N2), interacting with the intensive limit (32) and consisting of a receiver (40), the evaluation unit (24) and the control unit (23).

12. Ground working system according to claim 11,
**characterized in that** the navigation units (N1, N2) are connected to a common control unit (23).

13. Ground working system according to claim 1,
**characterized in that** a common navigation unit is provided for the edge boundary (2) and the intensive limit (32).

14. Ground working system according to claim 1,
**characterized in that** the edge boundary (2) of the operating region (A) is formed by a laid wire (43).

15. Ground working system according to claim 14,
set up such that a wire signal (41) is transmitted on the wire (43), that the wire signal (41) induces a reception signal in a reception coil (6, 7) of the ground working device (1.1, 1.2, 1.3) and the reception signal is used for controlling the ground working device (1.1, 1.2, 1.3) within the operating region (A).

16. Ground working system according to claim 1,
**characterized in that** the ground working device (1.1, 1.2, 1.3) is a self-driving lawnmower (10).

17. Ground working system according to claim 16,
comprising multiple ground working devices (1.1, 1.2, 1.3), wherein the ground working system is set up such that the operating region and the at least one intensive zone are worked by multiple ground working devices (1.1, 1.2, 1.3) and the control and management of the multiple ground working devices (1.1, 1.2, 1.3) takes place by means of a central control unit such as a server.

## Revendications

1. Système de traitement de sol comprenant un assistant électronique et au moins un dispositif de traitement de sol autopropulsé (1.1, 1.2, 1.3), le dispositif de traitement de sol (1.1, 1.2, 1.3) comportant un entraînement (11), une unité de commande (23) et une batterie embarquée (28) destinée à l'alimentation en énergie du dispositif de traitement de sol (1.1, 1.2, 1.3), et une zone de travail (A) du dispositif de traitement de sol (1.1, 1.2, 1.3) étant déterminée par une délimitation de bord (2), le dispositif de traitement de sol (1.1, 1.2, 1.3) étant adapté pour emprunter un chemin de travail (W), déterminé par l'unité de commande (23), dans la zone de travail (A),
au moins une limite intensive (32) étant spécifiée dans la zone de travail (A) du dispositif de traitement de sol (1.1, 1.2, 1.3) et une limite intensive (32) délimitant une zone intensive (B), et le dispositif de traitement de sol (1.1, 1.2, 1.3) étant adapté pour emprunter ses chemins de déplacement dans un mode intensif dans les limites intensives (32) et pour modifier dans le mode intensif son sens de déplacement à l'approche de la limite intensive (32), ou lorsque celle-ci est atteinte, afin de rester dans la zone intensive (B), et le dispositif de traitement de sol (1.1, 1.2, 1.3) étant adapté pour être commandé dans le mode intensif de façon à fonctionner dans les limites intensives fixées (32) de la zone intensive (B) de façon à traiter de préférence la zone intensive (B), la limite intensive (32) étant une limite virtuelle fixée électroniquement par l'utilisateur (31) au moyen de l'assistant électronique (33), l'assistant électronique (33) étant une unité de commande électronique, un smartphone ou une tablette, l'assistant comprenant une application permettant à l'utilisateur (31) de déterminer une zone intensive sur cet assistant en exécutant l'application démarrée, **caractérisé en ce que** l'application est conçue de manière à pouvoir former une zone intensive (B) de forme de base quelconque (38).

2. Système de traitement de sol selon la revendication 1,
adapté de telle sorte que le dispositif de traitement de sol (1.1, 1.2, 1.3) passe dans le mode intensif lorsqu'une limite intensive (32) est franchie.

3. Système de traitement de sol selon la revendication 1,
**caractérisé en ce que** le dispositif de traitement de sol (1.1, 1.2, 1.3) est adapté pour être commandé dans le mode intensif de façon à ne fonctionner dans la zone intensive (B) que dans les limites intensives (32).

4. Système de traitement de sol selon la revendication 1,
**caractérisé en ce que** le dispositif de traitement de sol (1.1, 1.2, 1.3) est adapté pour passer dans le mode intensif lorsque la limite intensive (32) est franchie pour la première fois.

5. Système de traitement de sol selon la revendication 1,
**caractérisé en ce que** le dispositif de traitement de sol (1.1, 1.2, 1.3) est configuré pour mettre fin au mode intensif du dispositif de traitement de sol (1.1, 1.2, 1.3) après qu'un paramètre de désactivation spécifié a été atteint.

6. Système de traitement de sol selon la revendication 5,
**caractérisé en ce que** le paramètre de désactivation est une durée prédéterminée, un nombre spécifié de changements de direction du dispositif de traitement de sol (1.1, 1.2, 1.3) dans la zone intensive (B) et/ou une distance parcourue spécifiée du chemin de déplacement (W) du dispositif de traitement de sol (1.1, 1.2, 1.3) dans la zone intensive (B).

7. Système de traitement de sol selon la revendication 1,
**caractérisé en ce que** le traitement terminé d'une zone intensive respective (B) est mémorisé dans le dispositif de traitement de sol (1.1, 1.2, 1.3) au moyen d'une variable d'état.

8. Système de traitement de sol selon la revendication 7,
adapté pour que le dispositif de traitement de sol (1.1, 1.2, 1.3) passe dans le mode intensif en fonction des variables d'état.

9. Système de traitement de sol selon la revendication 7,
**caractérisé en ce que** le dispositif de traitement sol (1.1, 1.2, 1.3) est adapté pour réinitialiser les variables d'état du dispositif de traitement de sol (1.1, 1.2, 1.3) en fonction de variables de fonctionnement sélectionnées du dispositif de traitement de sol (1.1, 1.2, 1.3).

10. Système de traitement de sol selon la revendication 9,
**caractérisé en ce qu'**une variable de fonctionnement sélectionnée est formée par une durée de fonctionnement du dispositif de traitement de sol (1.1, 1.2, 1.3), une distance parcourue du chemin de déplacement (W) du dispositif de traitement de sol (1.1, 1.2, 1.3), un nombre de changements de direction du dispositif de traitement de sol (1.1, 1.2, 1.3) et/ou un nombre de fois qu'une limite intensive (32) d'une zone intensive (B) est franchie par le dispositif de traitement de sol (1.1, 1.2, 1.3).

11. Système de traitement de sol selon la revendication 1,
**caractérisé en ce que** le dispositif de traitement de sol (1.1, 1.2, 1.3) comporte une première, première unité de navigation (N1), qui coopère avec la délimitation de bord (2) de la zone de travail (A) et qui comprend des bobines de réception (6, 7) et une unité d'évaluation (24), et au moins une autre unité de navigation (N2) qui coopère avec la limite intensive (32) et qui comprend un récepteur (40), l'unité d'évaluation (24) et l'unité de commande (23).

12. Système de traitement de sol selon la revendication 11,
**caractérisé en ce que** les unités de navigation (N1, N2) sont raccordées à une unité de commande commune (23).

13. Système de traitement de sol selon la revendication 1,
**caractérisé en ce qu'**une unité de navigation commune est prévue pour la délimitation de bord (2) et la limite intensive (32).

14. Système de traitement de sol selon la revendication 1,
**caractérisé en ce que** la délimitation de bord (2) de la zone de travail (A) est formée par un fil posé (43).

15. Système de traitement de sol selon la revendication 14,
adapté de telle sorte qu'un signal de fil (41) est envoyé sur le fil (43), que le signal de fil (41) induit un signal de réception dans une bobine de réception (6, 7) du dispositif de traitement de sol (1.1, 1.2, 1.3) et que le signal de réception est utilisé pour commander le dispositif de traitement de sol (1.1, 1.2, 1.3) dans la zone de travail (A).

16. Système de traitement de sol selon la revendication 1,
**caractérisé en ce que** le dispositif de traitement de sol (1.1, 1.2, 1.3) est une tondeuse à gazon automotrice (10).

17. Système de traitement de sol selon la revendication 16
comprenant plusieurs dispositifs de traitement de sol (1.1, 1.2, 1.3), le système de traitement de sol étant adapté de manière à ce que la zone de travail et l'au moins une zone intensive soient traitées par une pluralité de dispositifs de traitement de sol (1.1, 1.2, 1.3) et la commande et la gestion de la pluralité de dispositifs de traitement de sol (1.1, 1.2, 1.3) sont effectuées par le biais d'une unité de commande centrale telle qu'un serveur.
